# EUROPÄISCHE PATENTSCHRIFT

(11) **EP 2 000 634 B1**
(45) Veröffentlichungstag und Bekanntmachung des Hinweises auf die Patenterteilung: **24.08.2016**
(21) Anmeldenummer: 08002234.6
(22) Anmeldetag: 07.02.2008
(51) Int. Cl.: F01K 3/02, F23K 5/00, F02C 6/14, F02C 6/18

(54) **Gasturbinenkraftwerk sowie Verfahren zum Betreiben eines Gasturbinenkraftwerks**
Gas turbine power plant and method for operating a gas turbine power plant
Centrale de turbine à gaz et procédé de fonctionnement d'une centrale de turbine à gaz

(30) Priorität: 27.03.2007 DE 102007015215
(43) Veröffentlichungstag der Anmeldung: 10.12.2008
(73) Patentinhaber: RWE Generation SE, 45128 Essen (DE)
(72) Erfinder: Eisert, Heiko, 49835 Wietmarschen (DE)
(74) Vertreter: Kierdorf Ritschel Richly

(56) Entgegenhaltungen:
- EP-A2- 1 519 115
- US-A1- 2004 188 360

## Beschreibung

Die Erfindung betrifft ein Gasturbinenkraftwerk sowie ein Verfahren zum Betreiben eines Gasturbinenkraftwerks. Die Erfindung betrifft insbesondere ein Gasturbinenkraftwerk mit wenigstens einer Einspeisestation, mit wenigstens einer Verdichterstation mit wenigstens einem Verdichter und mit wenigstens einer Gasturbine.

Unter Vorrichtung im Sinne der Erfindung ist immer ein Brenngasverdichter zu verstehen.

Solche Gasturbinenkraftwerke nutzen in bekannter Art und Weise Gas als Brennstoff für eine Gasturbine, die ihrerseits einen angekuppelten Generator antreibt. Obwohl vorstehend auf ein Gasturbinenkraftwerk bzw. Gaskraftwerk Bezug genommen wird, ist die Erfindung so zu verstehen, dass sie sich auch auf sogenannte GuD-Kraftwerke bezieht, bei denen der Gasturbinen- und Dampfturbinenprozess miteinander kombiniert werden. Dieser GuD-Prozess wird auch als "combined cycle power plant" oder "combined cycle gas turbine" bezeichnet. Gaskraftwerke haben gegenüber Kohlekraftwerken den Vorzug, dass die Anfahrzeit vom Stillstand auf Volllast sehr kurz ist. Gaskraftwerke werden daher vor allem zur Abdeckung von Lastspitzen im Stromnetz eingesetzt. Übliche Betriebsdrücke für Gasturbinen betrugen früher etwa 16 bar. Heute werden Gasturbinen üblicherweise mit Betriebsdrücken von etwa 50 bar betrieben. Ein Betriebsdruck von 50 bar steht im Gasversorgungsnetz nicht überall zur Verfügung. Nahe eines Gasversorgungsnetzes sind verschiedene Transportverdichterstationen des Gasnetzbetreibers vorgesehen, die dazu dienen, die Druckverluste des Versorgungsnetzes auszugleichen. Hinter solchen Verdichterstationen können Leitungsdrücke bis zu 95 bar anstehen. In der Regel sind Verdichterstationen alle 100 bis 200 km entlang einer Gasversorgungsleitung vorgesehen.

Daraus ergibt sich, dass der vom Gasnetzbetreiber zur Verfügung gestellte Leitungsdruck je nach Lage des Kraftwerks unterschiedlich sein kann und nicht immer dem benötigten Gasdruck an der Turbine entspricht. Üblicherweise besitzen daher Gasturbinenkraftwerke Verdichterstationen, in denen mittels eines oder mehrerer Verdichtern das Gas auf den benötigten Druck verdichtet wird. Ist der Gasdruck im Versorgungsnetz erheblich höher als an der Gasturbine benötigt wird, erfolgt eine Druckreduzierung in hierfür vorgesehenen Drosseleinrichtungen.

Die für den Verdichterbetrieb benötigte Energie steht für die Einspeisung ins Stromnetz nicht zur Verfügung, was insbesondere bei Betrieb der Gasturbine zur Deckung des Spitzenlastbedarfs nicht wünschenswert ist.

Aus der EP 1 519 115 A2 ist ein Verfahren zum Betrieb einer Gasturbine mit verschiedenen Brennstoffen bekannt, wobei die Gasturbine bei Volllast mit einem ersten Brennstoff betrieben wird und bei Teillast mit einem zweiten Brennstoff betrieben wird, welcher gegenüber dem ersten Brennstoff einen größeren Anteil an höherwertigen Kohlenwasserstoffen mit zwei und mehr Kohlenstoffatomen pro Molekül aufweist.

Der Erfindung liegt daher die Aufgabe zugrunde, ein Gasturbinenkraftwerk der Eingangs genannten Art im Hinblick auf die zuvor geschilderte Problematik zu verbessern sowie ein Verfahren bereitzustellen, welches die zuvor erwähnten Nachteile nicht aufweist.

Die Aufgabe wird gelöst durch ein Gasturbinenkraftwerk mit dem Merkmal des Anspruchs 1 sowie durch ein Verfahren mit den Merkmalen des Anspruchs 7.

Mittels des Druckgasspeichers lässt sich in vorteilhafter Weise die für einen oder mehrere Verdichter benötigte Antriebsleistung zeitlich vom Betrieb der Gasturbine entkoppeln.

Ist der Versorgungsnetzdruck größer als der an der Gasturbine benötigte Druck, kann die zur Verfügung stehende Druckdifferenz zur Beladung des Druckgasspeichers genutzt werden. Der Druckgasspeicher kann ebenfalls während des Stillstands der Gasturbine beladen werden.

Bei einer bevorzugten Variante des Gasturbinenkraftwerks gemäß der Erfindung ist vorgesehen, dass der Verdichter, der Druckgasspeicher und die Gasturbine in Reihe geschaltet sind.

Alternativ kann der Druckgasspeicher zu dem Verdichter und der Gasturbine parallel geschaltet sein.

Der Druckgasspeicher kann vorteilhafterweise als Röhrenspeicher ausgebildet sein. Ein solcher Röhrenspeicher kann beispielsweise aus einer Anzahl von zueinander parallel an die Gasversorgungsleitung angeschlossenen Röhren bestehen, die jeweils einzeln absperrbar sind. Alternativ kann als Druckgasspeicher auch ein Kavernenspeicher vorgesehen sein. Beispielsweise kommen hierfür natürliche Lagerstätten in Betracht, die bereits ganz oder teilweise ausgebeutet wurden.

Zweckmäßigerweise ist der Druckgasspeicher für einen Betriebsdruck von etwa 130 bar Überdruck ausgelegt. Ein solcher Betriebsdruck ist insbesondere dann zweckmäßig, wenn als Druckgasspeicher ein Röhrenspeicher in Betracht kommt. Kommt als Druckgasspeicher beispielsweise ein Kavernenspeicher in Betracht, kann der Betriebsdruck um ein Vielfaches höher sein.

Der Verdichter ist so geschaltet, dass er wahlweise ganz oder teilweise die Gasturbine und/oder den Druckgasspeicher beschicken kann. Vorstehend ist jeweils nur von einem Verdichter die Rede, es ist für den Fachmann selbstverständlich, dass eine Verdichterstation mehrere Verdichter umfassen kann, die parallel oder wechselweise betreibbar sind.

Bei einer Variante des Gasturbinenkraftwerks gemäß der Erfindung ist vorgesehen, dass wenigstens eine Überbrückungsleitung von der Einspeisestation zu dem Druckspeicher oder zu der Gasturbine vorgesehen ist. So ist der Verdichter bedarfsweise überbrückbar, was immer dann wünschenswert ist, wenn der Gasnetzbetreiber das Gas mit einem Druck zur Verfügung stellt, der größer ist als es für den Betrieb der Gasturbine erforderlich ist.

Die der Erfindung zugrunde liegende Aufgabe wird weiterhin gelöst durch ein Verfahren zum Betreiben eines Gasturbinenkraftwerks mit wenigstens einer Einspeisestation, mit wenigstens einer Verdichterstation mit wenigstens einem Verdichter, mit wenigstens einer Gasturbine und mit wenigstens einem Druckgasspeicher, wobei das aus dem Gasleitungsnetz an der Einspeisestation entnommene Gas in Abhängigkeit des vorherrschenden Leitungsdrucks in dem Versorgungsnetz bedarfsweise verdichtet wird und in Abhängigkeit eines vorgegebenen Betriebszyklus der Gasturbine in den Druckgasspeicher gefördert und/oder der Gasturbine zugeführt wird, wobei die Gasturbine wahlweise aus dem Druckgasspeicher oder aus dem Versorgungsnetz, gegebenenfalls unter Verdichtung des Gases, beschickbar ist. Auf diese Art und Weise lassen sich verschiedene Versorgungskonzepte realisieren. Ist der Versorgungsnetzdruck größer als von der Turbine gefordert und die Turbine in Betrieb, können die Turbine und der Druckgasspeicher unmittelbar aus dem Versorgungsnetz gespeist werden. Ist der Versorgungsnetzdruck geringer als erforderlich und die Turbine in Betrieb, kann die Turbine über den Verdichter betrieben werden. Ist die Turbine außer Betrieb und der Versorgungsnetzdruck kleiner 50 bar, kann über den Verdichter der Druckerspeicher beladen werden. Ist bei nicht in Betrieb befindlicher Gasturbine der Versorgungsnetzdruck größer als 50 bar, kann der Druckgasspeicher unter Überbrückung der Verdichterstation beladen werden.

Zweckmäßigerweise wird der Betriebszyklus der Gasturbine lastabhängig vorgegeben. Wenn keine Spitzenlastabdeckung erforderlich ist, ist die Gasturbine vorzugsweise nicht in Betrieb.

Bei dem Verfahren gemäß der Erfindung ist vorgesehen, dass die Gasturbine zur Deckung der Tagstromlast tagsüber betrieben wird und das während der Stillstandszeit der Gasturbine das aus dem Versorgungsnetz entnommene Gas in dem Druckgasspeicher gefördert wird.

Zweckmäßig ist es, wenn der Druckgasspeicher entsprechend dem Betriebszyklus der Gasturbine entleert und gefüllt wird. D.h., dass der Druckgasspeicher vorzugsweise bei Stillstand der Gasturbine gefüllt wird, bei Betrieb der Gasturbine hingegen gegebenenfalls entleert wird. Dabei kann beispielsweise vorgesehen sein, dass nur der Differenzdruck des Druckgasspeichers zwischen dem Betriebsdruck der Gasturbine und dem maximalen Betriebsdruck des Druckgasspeicher genutzt wird. Wenn die Gasturbine beispielsweise mit einem Druck von etwa 50 bar Überdruck betrieben wird, eine Aufladung des Druckgasspeichers bis zu einem maximalen Betriebsdruck von etwa 130 bar möglich ist, so wird zweckmäßigerweise eine zyklische Entladung und Beladung des Druckgasspeichers zwischen 50 und 130 bar vorgenommen. Besonders vorteilhaft ist dies, wenn eine solche Entladung und Beladung im Tag-Nacht-Zyklus erfolgt, so dass erforderlichenfalls der oder die Verdichter mit günstigem Nachtstrom betrieben werden können und die Gasturbine tagsüber den gesamten Bedarf aus dem Druckgasspeicher bezieht. Dies ist insbesondere deshalb günstig, weil der Strom zum Betrieb eines Verdichters vom Generator dann nicht abgezweigt wird, wenn die Gasturbine einen Spitzenlastbedarf des Stromnetzes decken soll. Der Betrieb des Verdichters ist also zeitlich vom Betrieb der Gasturbine entkoppelt, so dass der Verdichter dann betrieben werden kann, wenn Strom hierfür zur Verfügung steht. Zu Zeiten, wenn die Gasturbine einen Spitzenlastbedarf des Stromnetzes decken soll, das ist häufiger tagsüber der Fall, steht üblicherweise nicht genug Strom zum Betrieb einer oder mehrerer Verdichter zur Verfügung.

Das Gaskraftwerk gemäß der Erfindung umfasst selbstverständlich einen oder mehrere Generatoren. Auch kann dieses mehrere Gasturbinen umfassen, deren Abhitze beispielsweise zur Gasvorwärmung genutzt werden kann. Zusätzlich können die Gasturbinen in Kombination mit einer oder mehreren Dampfturbinen verschaltet sein.

Die Erfindung wird nachstehend anhand dreier in der Zeichnung dargestellter Ausführungsbeispiele erläutert. Es zeigen:
Figur 1 ein stark vereinfachtes Schaltbild zur schematischen Darstellung einer ersten Variante eines Gaskraftwerksprozesses gemäß der Erfindung,
Figur 2 eine zweite Variante der Verschaltung der Bestandteile des Gaskraftwerks und
Figur 3 eine dritte Variante des Gaskraftwerks gemäß der Erfindung.

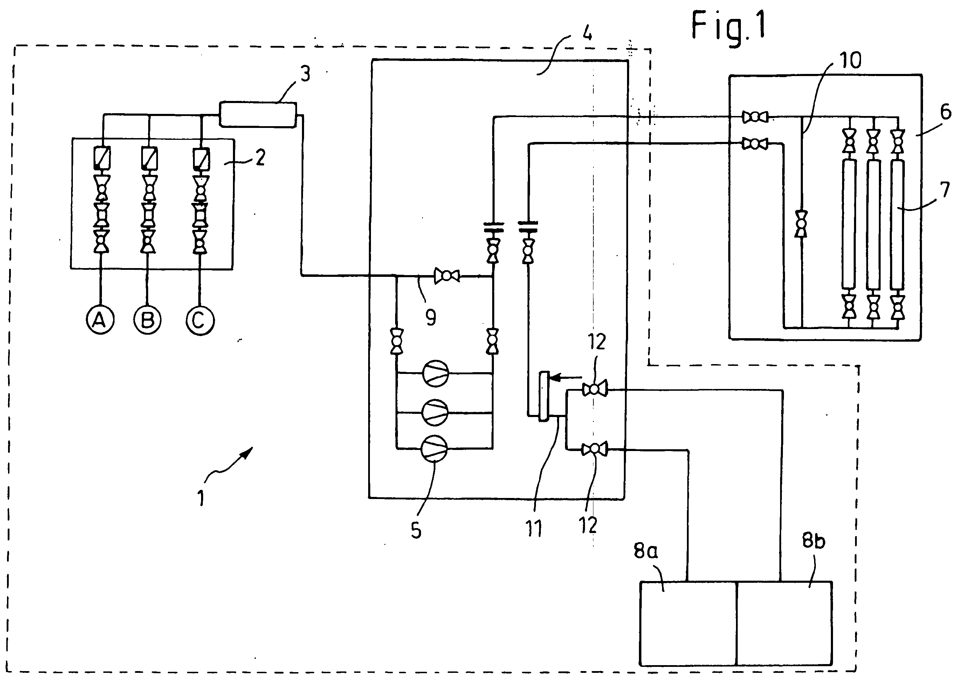

Es wird zunächst Bezug genommen auf Figur 1. Das Gaskraftwerk 1 ist dort in Form eines Blockschaltbilds dargestellt. Das Gas wird von einem Versorgungsnetzbetreiber über die Versorgungsleitungen A, B und C bereitgestellt und über eine mit 2 bezeichnete Einspeisestation einem Mischer 3 zugeführt. Über die verschiedenen Versorgungsleitungen A, B, C wird Gas unterschiedlicher Qualität (unterschiedlichen Heizwertes) mit jeweils unterschiedlichem Druck bereitgestellt. Es ist für den Fachmann klar, dass die Versorgungsleitungen A, B, C jeweils von unterschiedlichen Versorgungsnetzanbietem betrieben werden können. In dem Mischer 3 wird der Gasstrom gemischt und vereinheitlicht. Dem Mischer nachgeschaltet ist eine Verdichterstation 4, die drei einander parallel geschaltete Verdichter 5 umfasst. Der Verdichterstation 4 nachgeschaltet ist die Druckgasspeicherstation 6, die einen Röhrenspeicher 7 umfasst. Der Druckgasspeicherstation 6 sind wiederum zwei Gasturbinen 8a und 8b nachgeschaltet.

Bei der in Figur 1 dargestellten Variante des Gaskraftwerks 1 sind die Verdichterstation 4, die Druckgasspeicherstation 6 und die Gasturbinen 8a, 8b in Reihe geschaltet. Mit einer ersten Überbrückungsleitung 9 sind die Verdichter 5 überbrückbar, mit einer zweiten Überbrückungsleitung 10 sind die Röhrenspeicher 7 überbrückbar.

Erfindungsgemäß ist nun vorgesehen, dass das Gas von den Versorgungsleitungen A, B, C über die Einspeisestation 2 und den Mischer 3 in die Verdichterstation 4 gelangt. In dem Fall, dass der Druck des Gasgemischs geringer ist, als der von den Gasturbinen 8a, 8b geforderte Druck, wird das Gasgemisch über die Verdichter 5 in die Röhrenspeicher 7 transportiert. Von dort gelangt das Gasgemisch über eine Verzweigung 11 und zwei Drosseln 12 jeweils an die Gasturbinen 8a, 8b. Über die zweite Überbrückungsleitung 10 lassen sich die Röhrenspeicher 7 überbrücken, so dass die Verdichter 5 direkt die Gasturbinen 8a, 8b speisen.

Für den Fall, dass das Gasgemisch einen ausreichend hohen Druck hat, werden die Verdichter 5 über die erste Überbrückungsleitung 9 überbrückt.

Das Verfahren sieht nun vor, dass bei Nichtbetrieb der Gasturbinen 8a, 8b, vorzugsweise nachts, das von dem Gasnetzversorger eingespeiste Gas je nach Druck zusätzlich verdichtet wird oder unmittelbar in die Röhrenspeicher 7 gefördert wird. Die Beladung der Röhrenspeicher 7 erfolgt vorzugsweise dann, wenn die Gasturbinen nicht in Betrieb sind, beispielsweise nachts. Die Verdichter 5 können dabei mit günstigem Nachtstrom betrieben werden. Tagsüber, wenn die Gasturbinen 8a, 8b in Betrieb sind, wird das Gasgemisch aus den Röhrenspeichem 7 den Gasturbinen 8a, 8b zugeführt.

Bei dem in Figur 1 dargestellten Ausführungsbeispiel sind die Gasturbinen 8a, 8b immer hinter den Röhrenspeicher 7 geschaltet.

Das hat den Vorzug, dass die Verdichter 5 immer verfahrenstechnisch von den Gasturbinen 8a, 8b getrennt sind, fällt einer der Verdichter aus, kann ein in Reserve stehender Verdichter zugeschaltet werden. Die Verdichter (5) können zu jeder Zeit zu- und abgeschaltet werden und auf Maximaldruck ausgelegt sein, der etwa 130 bar beträgt.

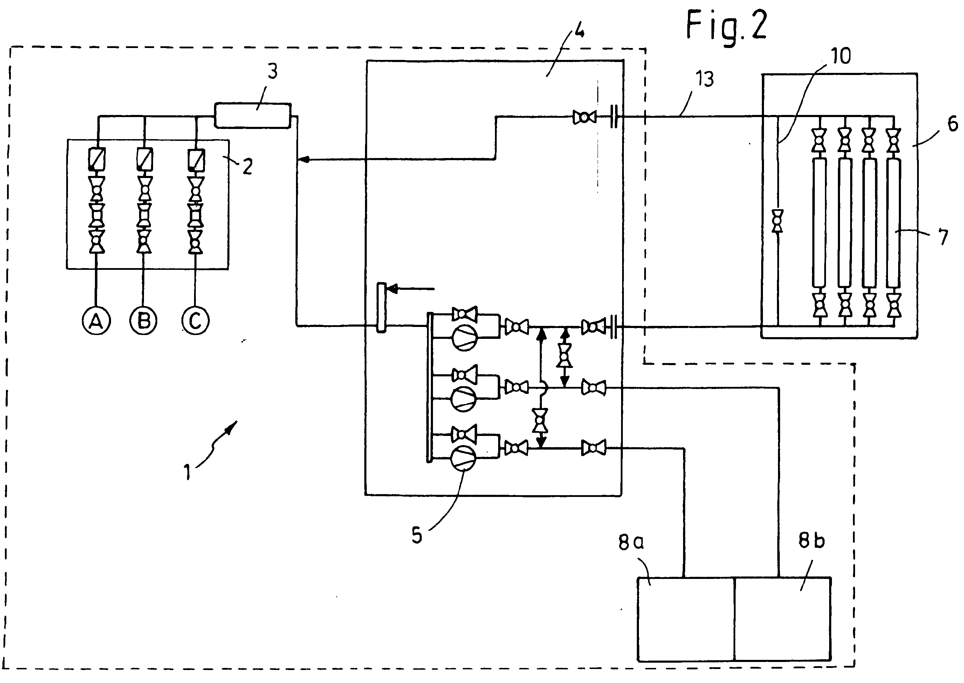

Die in Figur 2 dargestellte Variante des Gaskraftwerks 1 unterscheidet sich von der in Figur 1 dargestellten Variante dadurch, dass die Röhrenspeicher 7 zu den Verdichtern 5 und den Gasturbinen 8a, 8b parallel geschaltet sind, so dass die Gasturbinen 8a, 8b unmittelbar über die Verdichter 5 gespeist werden können. Bei dieser Schaltungsvariante können die Gasturbinen 8a, 8b unmittelbar über die Verdichter 5 gespeist werden, parallel können die Röhrenspeicher 7 beladen werden oder entladen werden, wobei die Entladung über die Rückspeiseleitung 13 erfolgt. Diese Variante hat den Vorzug, dass die Röhrenspeicher 7 über eine größere Druckdifferenz nutzbar sind, da ein Parallelbetrieb von Verdichtern und Röhrenspeicher möglich ist. Die Nutzung einer größeren Druckdifferenz beim zyklischen Be- und Entladen hat allerdings den Nachteil der stärkeren Materialbeanspruchung und ggf. schnellerer Materialermüdung.

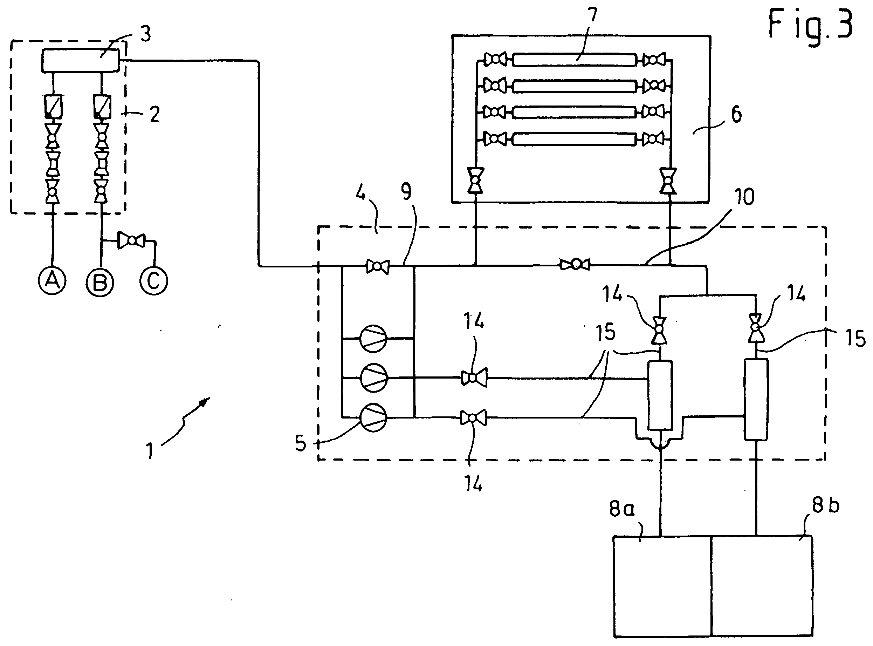

Bei der in Figur 3 dargestellten Variante des Gaskraftwerks 1 sind die Röhrenspeicher 7 ebenfalls zu den Verdichtern 5 parallel geschaltet, wobei sowohl eine Einspeisung in die Gasturbinen 8a, 8b unmittelbar über die Verdichter 5 oder wahlweise unmittelbar über die Röhrenspeicher 7 möglich ist. Mit 14 sind Regelventile mit hydraulischer auf/zu Funktion sowie Mengen- und Druckregelfunktion bezeichnet, die jeweils in den Zufuhrleitungen (15) von den Verdichtern 5 und von den Röhrenspeichem 7 in die Gasturbinen 8a, 8b angeordnet sind. Diese Zufuhrleitungen 15 führen unmittelbar in den den Gasturbinen 8a, 8b vorgeschalteten Mischer, so dass ein Parallelbezug der Gasturbinen 8a, 8b aus den Verdichtern 5 und den Röhrenspeichern 7 möglich ist.

Als Mischer im Sinne der Erfinder werden hier Rohrleitungen oder Behälter mit strömungstechnisch wirksamen Einbauten zur Vergleichmäßigung und durch Mischung unterschiedlicher Gasströmungen bezeichnet.

In dem in Figur 3 dargestellten Anlagenschema ist ebenfalls eine Überbrückungsleitung 9 zur Überbrückung der Verdichter 5 vorgesehen.

### Bezugszeichenliste

- 1: Gaskraftwerk
- A, B, C: Versorgungsleitungen
- 2: Einspeisestation
- 3: Mischer
- 4: Verdichterstation
- 5: Verdichter
- 6: Druckgasspeicherstation
- 7: Röhrenspeicher
- 8a, 8b: Gasturbinen
- 9: Erste Überbrückungsleitung
- 10: Zweite Überbrückungsleitung
- 11: Verzweigung
- 12: Drosseln
- 13: Rückspeiseleitung
- 14: Regelventile
- 15: Zufuhrleitungen

## Patentansprüche

1. Gasturbinenkraftwerk mit wenigstens einer Einspeisestation (2), wenigstens einer Verdichterstation (4) mit wenigstens einem Verdichter (5) und wenigstens einer Gasturbine (8a, 8b) mit einem an den Verdichter (5) angeschlossenen Druckgasspeicher (7), aus welchem bedarfsweise die Gasturbine beschickbar ist, und **dadurch gekennzeichnet, dass** der Verdichter so geschaltet ist, dass er wahlweise ganz oder teilweise die Gasturbine und/oder den Druckgasspeicher (7) beschicken kann, wobei wenigstens eine Überbrückungsleitung (10) von dem Verdicher (5) zu der Gasturbine (8a, 8b) vorgesehen ist.

2. Gasturbinenkraftwerk nach Anspruch 1, **dadurch gekennzeichnet, dass** der Verdichter (5), der Druckgasspeicher (7) und die Gasturbine (8a, 8b) in Reihe geschaltet sind.

3. Gasturbinenkraftwerk nach Anspruch 1, **dadurch gekennzeichnet, dass** der Druckgasspeicher (7) zu dem Verdichter (5) und der Gasturbine (8a, 8b) parallel geschaltet ist.

4. Gasturbinenkraftwerk nach einem der Ansprüche 1 bis 3, **dadurch gekennzeichnet, dass** der Druckgasspeicher (7) als Röhrenspeicher (7) ausgebildet ist.

5. Gasturbinenkraftwerk nach einem der Ansprüche 1 bis 4, **dadurch gekennzeichnet, dass** der Druckgasspeicher für einen Betriebsdruck von bis zu 130 bar Überdruck ausgelegt ist.

6. Gasturbinenkraftwerk nach einem der Ansprüche 1 bis 5, **dadurch gekennzeichnet, dass** wenigstens eine Überbrückungsleitung (9) von der Einspeisestation (2) zu dem Druckgasspeicher (7) oder zu der Gasturbine (8a, 8b) vorgesehen ist.

7. Verfahren zum Betreiben eines Gasturbinenkraftwerks mit wenigstens einer Einspeisestation und mit wenigstens einer Verdichterstation mit wenigstens einem Verdichter, mit wenigstens einer Gasturbine und mit wenigstens einem Druckgasspeicher, wobei das aus dem Versorgungsnetz an der Einspeisestation entnommene Gas in Abhängigkeit des vorherrschenden Leitungsdrucks in dem Versorgungsnetz bedarfsweise verdichtet wird und in Abhängigkeit eines vorgegebenen Betriebszyklus der Gasturbine in den Druckgasspeicher gefördert und/oder der Gasturbine zugeführt wird, wobei die Gasturbine wahlweise aus dem Druckgasspeicher oder aus dem Versorgungsnetz gegebenenfalls unter Verdichtung des Gases beschickbar ist, wobei die Gasturbine zur Deckung der Tagstromlast tagsüber betrieben wird und während der Stillstandszeit der Gasturbine das aus dem Versorgungsnetz entnommene Gas in den Druckgasspeicher gefördert wird.

8. Verfahren nach Anspruch 7, **dadurch gekennzeichnet, dass** der Betriebszyklus der Gasturbine lastabhängig vorgeben wird.

9. Verfahren nach einem der Ansprüche 7 oder 8, **dadurch gekennzeichnet, dass** der Druckgasspeicher entsprechend dem Betriebszyklus der Gasturbine, vorzugsweise gegenläufig, entleert und gefüllt wird.

10. Verfahren nach einem der Ansprüche 7 bis 8, **dadurch gekennzeichnet, dass** nur der Differenzdruck des Druckgasspeichers zwischen dem Betriebsdruck der Gasturbine und dem maximalen Betriebsdruck des Druckgasspeichers genutzt wird.

## Claims

1. Gas turbine power plant with at least one feeding station (2), at least one compressor station (4) with at least one compressor (5) and at least one gas turbine (8a, 8b) with a compressed gas storage facility (7) which is connected to the compressor (5) and from which the gas turbine can be charged as and when required and **characterized in that** the compressor is connected in such a way that it can optionally charge the gas turbine and/or the compressed gas storage facility (7) fully or partially, wherein at least one bridging line (10) is provided from the compressor (5) to the gas turbine (8a, 8b).

2. Gas turbine power plant according to Claim 1, **characterized in that** the compressor (5), the compressed gas storage facility (7) and the gas turbine (8a, 8b) are connected in series.

3. Gas turbine power plant according to Claim 1, **characterized in that** the compressed gas storage facility (7) is connected in parallel with the compressor (5) and the gas turbine (8a, 8b).

4. Gas turbine power plant according to one of Claims 1 to 3, **characterized in that** the compressed gas storage facility (7) is formed as a pipe storage facility (7).

5. Gas turbine power plant according to one of Claims 1 to 4, **characterized in that** the compressed gas storage facility is designed for an operating pressure of up to 130 bar positive pressure.

6. Gas turbine power plant according to one of Claims 1 to 5, **characterized in that** at least one bridging line (9) is provided from the feeding station (2) to the compressed gas storage facility (7) or to the gas turbine (8a, 8b).

7. Method for operating a gas turbine power plant with at least one feeding station and with at least one compressor station with at least one compressor, with at least one gas turbine and with at least one compressed gas storage facility, wherein the gas taken from the supply system at the feeding station is compressed as and when required in dependence on the prevailing line pressure in the supply system and is delivered into the compressed gas storage facility and/or fed to the gas turbine in dependence on a predetermined operating cycle of the gas turbine, wherein the gas turbine can optionally be charged from the compressed gas storage facility or from the supply system while the gas undergoes compression, wherein during the daytime the gas turbine is operated for covering the daily power load and during the downtime of the gas turbine the gas removed from the supply system is delivered into the compressed gas storage facility.

8. Method according to Claim 7, **characterized in that** the operating cycle of the gas turbine is predetermined load-dependently.

9. Method according to either of Claims 7 and 8, **characterized in that** the compressed gas storage facility is emptied and filled in accordance with the operating cycle of the gas turbine, preferably oppositely.

10. Method according to either of Claims 7 and 8, **characterized in that** only the differential pressure of the compressed gas storage facility between the operating pressure of the gas turbine and the maximum operating pressure of the compressed gas storage facility is used.

## Revendications

1. Centrale à turbine à gaz avec au moins une station d'alimentation (2), au moins une station de compresseur (4) avec au moins un compresseur (5) et au moins une turbine à gaz (8a, 8b) avec un réservoir de gaz sous pression (7) raccordé au compresseur (5), à partir duquel la turbine à gaz peut au besoin être alimentée, et **caractérisée en ce que** le compresseur est configuré de telle manière qu'il puisse alimenter totalement ou partiellement la turbine à gaz et/ou le réservoir de gaz sous pression (7), dans laquelle il est prévu au moins une conduite de pontage (10) du compresseur (5) à la turbine à gaz (8a, 8b).

2. Centrale à turbine à gaz selon la revendication 1, **caractérisé en ce que** le compresseur (5), le réservoir de gaz sous pression (7) et la turbine à gaz (8a, 8b) sont installés en série.

3. Centrale à turbine à gaz selon la revendication 1, **caractérisée en ce que** le réservoir de gaz sous pression (7) est installé en parallèle au compresseur (5) et à la turbine à gaz (8a, 8b).

4. Centrale à turbine à gaz selon l'une quelconque des revendications 1 à 3, **caractérisé en ce que** le réservoir à gaz sous pression (7) est réalisé sous forme de réservoir à tubes (7).

5. Centrale à turbine à gaz selon l'une quelconque des revendications 1 à 4, **caractérisée en ce que** le réservoir de gaz sous pression est conçu pour une pression de service pouvant atteindre une surpression de 130 bar.

6. Centrale à turbine à gaz selon l'une quelconque des revendications 1 à 5, **caractérisée en ce qu'**il est prévu au moins une conduite de pontage (9) de la station d'alimentation (2) au réservoir de gaz sous pression (7) ou à la turbine à gaz (8a, 8b).

7. Procédé de conduite d'une centrale à turbine à gaz avec au moins une station d'alimentation et avec au moins une station de compresseur avec au moins un compresseur, avec au moins une turbine à gaz et avec au moins un réservoir de gaz sous pression, dans lequel le gaz prélevé dans le réseau de distribution à la station d'alimentation est au besoin comprimé en fonction de la pression régnant dans la conduite du réseau de distribution et est transporté dans le réservoir de gaz sous pression et/ou est envoyé à la turbine à gaz en fonction d'un cycle de fonctionnement prédéterminé de la turbine à gaz, dans lequel la turbine à gaz peut être alimentée au choix à partir du réservoir de gaz sous pression ou à partir du réseau de distribution éventuellement avec compression du gaz, dans lequel la turbine à gaz est exploitée pendant la journée pour couvrir la charge de courant journalière et, pendant le temps d'arrêt de la turbine à gaz, le gaz prélevé dans le réseau de distribution est transporté dans le réservoir de gaz sous pression.

8. Procédé selon la revendication 7, **caractérisé en ce que** le cycle de fonctionnement de la turbine à gaz est prédéterminé en fonction de la charge.

9. Procédé selon une des revendications 7 ou 8, **caractérisé en ce que** le réservoir de gaz sous pression est vidé et rempli selon le cycle de fonctionnement de la turbine à gaz, de préférence en opposition.

10. Procédé selon une des revendications 7 à 8, **caractérisé en ce que** l'on n'utilise que la pression différentielle du réservoir de gaz sous pression entre la pression de service de la turbine à gaz et la pression de service maximale du réservoir de gaz sous pression.
